# EUROPEAN PATENT APPLICATION

(11) **EP 1 920 949 A1**
(43) Date of publication of application: **14.05.2008**
(21) Application number: 07120381.4
(22) Date of filing: 09.11.2007
(51) Int. Cl.: B60C 11/04, B60C 11/00

(54) **Reduced noise pneumatic tire**

(30) Priority: 10.11.2006 US 595679
(71) Applicant: THE GOODYEAR TIRE & RUBBER COMPANY, Akron, OH 44316-0001 (US)
(72) Inventor: Landers, Samual Patrick, North Canton, OH 44685 (US); Sundkvist, Karl Eric, Akron, OH 44313 (US)
(74) Representative: Kutsch, Bernd

(57) **Abstract**

A pneumatic tire (10) has a tread (12) extending along the circumferential length of the tire. The tread is divided into at least two different regions (14, 16) across the width of the tread, and has a plurality of tread elements (20). Each tread element has a pitch length (P) as measured along the circumferential length of the tire. In each of the tread regions, different pitching methods are employed.

## Description

### Field of the Invention

The present invention is directed to a pneumatic tire. More particularly, the present invention is directed towards a pneumatic tire wherein the tire noise is reduced by zone pitching of the tire tread.

### Background of the Invention

A primary concern of tire designers is tire noise and how to reduce tread generated noise. Audible sounds are created as the tire travels upon a surface. A tire designer must select a tread design that reduces harsh disagreeable sounds and avoids annoying the driver of the vehicle. However, in the art, tires are designed for a specific purpose, and tires designed for one purpose very often have poor properties when used for another purpose. For example, tires designed specifically for use in snow are noisy and often provide a rough ride when used on dry pavement. Similarly, tires that are designed to be quiet often have poor traction properties in wet conditions.

Sounds that are generated by a rotating tire contacting the road surface are a form of energy transmission. When the energy transmitted is in a narrow frequency range the sound generally will be dominated by a single peak frequency. Such a tire will have a tonality, tonality being a sound generated with energy concentrated over a narrow range of the sound frequency spectrum.

To avoid tread patterns that in use generate undesirable sound characteristics resulting from dominate frequencies, various methods have been suggested that spread the energy produced over a wide frequency range. The most commonly accepted method relates to avoiding repetitive characteristics of the tread pattern. This method entails varying the circumferential length of design elements that are repeated over the circumferential length of the tire tread. This method of modulating or varying the repetitive pattern is commonly known as pitching as is discussed in US-B- 4,474,223.

It is the object of this invention to provide a tire which is quiet, has good handling properties, good wear properties, good all season traction qualities (wet, dry and snow), and provides a smooth ride.

### Summary of the Invention

The invention relates to a tire according to claim 1 and a method according to claim 10.

Dependent claims refer to preferred embodiments of the invention.

In accordance with one aspect of the invention, the tread which extends along the circumferential length of the tire is divided into at least two different regions across the width of the tread and has a plurality of tread elements. Each tread element has a pitch length as measured along the circumferential length of the tire. In each of the tread regions, different pitching methods are employed. Preferably, the different pitch methods are selected and the pitch lengths in each region are arranged in such a way that the noise frequency contribution generated in each tread region at least partially or substantially fully cancels or eliminates the noise frequency contribution generated in the other tread regions.

In one aspect of the invention, the tread has a tread central region and two shoulder regions, the tread central region employing a first pitching method and the two shoulder regions employing a second and different pitching method. Preferably, the different pitching methods employed are a repeating harmonic sequence pitching method and a random pitch sequence pitching method.

In another aspect of the invention, each pitching method has three to eight, preferably three to five, different pitch lengths used to form the pitching sequence.

In another aspect of the invention, in one of the tread regions, preferably the region employing a harmonic pitch sequence method, is a circumferentially extending groove having a configuration that is a visual representation of the pitch method used in that tread region. For the tread region employing a harmonic pitch sequencing method, the circumferential groove is a meandering, low amplitude groove that moves back and forth across the tread width in sync with the increasing and decreasing length pitches.

### Brief Description of the Drawings

The invention will be described by way of example and with reference to the accompanying drawings in which:
FIG. 1 is a tire having a tread incorporating the disclosed noise patterns;
FIG. 2 is a harmonic noise pattern
FIG. 3 illustrates the combination of a harmonic noise pattern and a random noise pattern; and
FIGS. 4 and 5 are alternative tread configurations.

### Detailed Description of the Invention

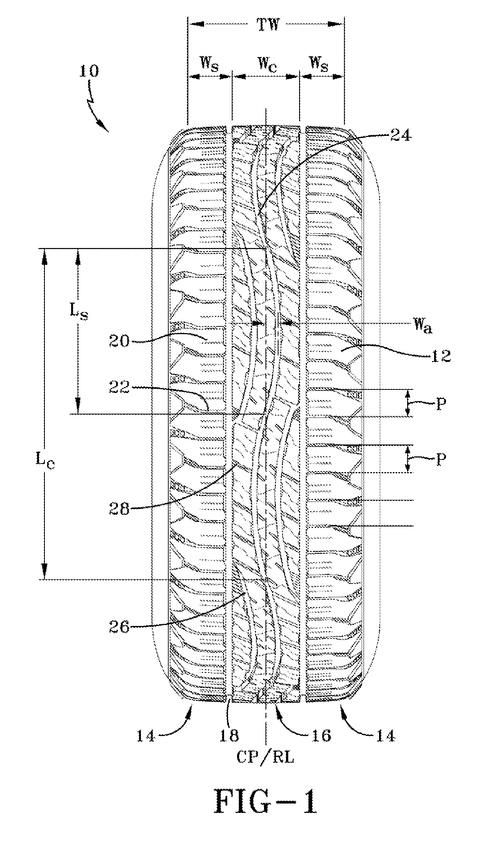

A tire 10 is illustrated in FIG. 1. On the radially outermost surface of the tire 10 is a tread 12. The tread 12 is divided into three regions: two opposing shoulder regions 14 and a central region 16. The regions 14, 16 are divided by continuous circumferentially extending grooves 18. The central region 16 has a width W_{c} in the range of 30 to 70% of the tread width TW, and by definition is centrally located in the tread 12. The shoulder regions 14 are located on opposing sides of the central tread region 16 and each has an equal width W_{S}.

In each region 14, 16 of the tire tread are repeating tread elements. In the shoulder regions 14, the repeating tread elements are circumferentially adjacent tread blocks 20 separated by lateral grooves 22. The grooves 22 may be inclined at any angle between 20° to 90° relative to a center plane CP of the tread. In the central region 16, repeating tread elements are created by a continuous circumferential groove 24, short length circumferential grooves 26, and lateral grooves 28 that may be inclined at any angle between 20° to 90° relative to the center plane CP.

The tread elements in each shoulder region 14 have a pitch length P in the circumferential direction measured between adjacent repeating elements. The tread elements in the shoulder regions 14 are selected to have three to eight different pitch lengths P, preferably three to five different pitch lengths. The different pitch lengths P are randomly arranged along the circumference of the tire; that is, within the pitch sequence pattern, no portion of the pattern is repeated. Each shoulder region 14 has one or two random pitch sequences along the tire.

Random pitch sequences are made up of all modulation frequencies with different amplitudes. The low frequency components of the pitches can excite the natural radial and tangential frequencies of the tire if they match up at certain speeds. When this happens, the tire may resonate and shake, introducing an undesired low frequency ride disturbance. In the past, such a low frequency ride event was not a detriment to the perceived vehicle performance. However, as auto manufacturing has continued to advance, removing friction from the suspension and steering systems of vehicles to improve fuel efficiency has resulted in the vehicle becoming more sensitive to such low frequency events.

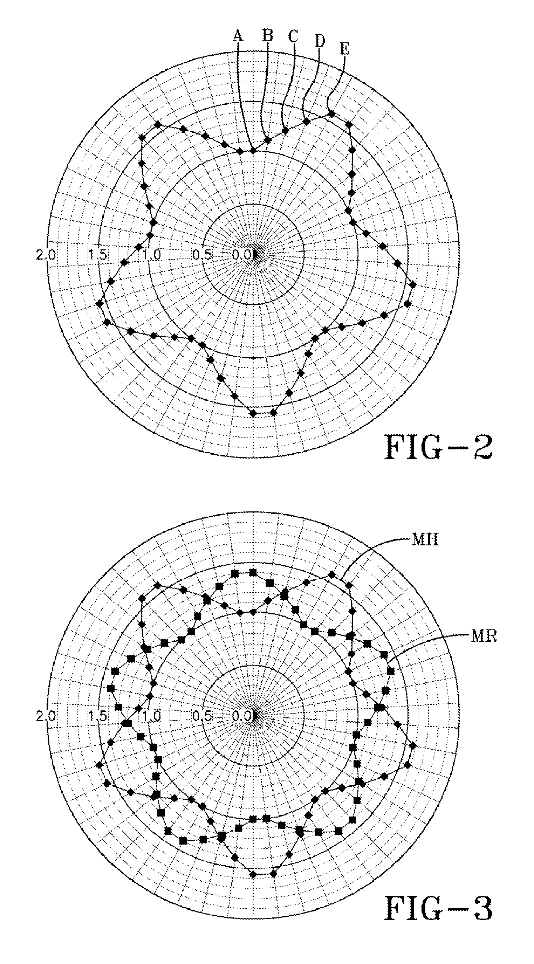

To offset any generated low frequency event occurring from the random pitching in the tread shoulder regions 14, the central tread region 16 is provided with a different pitching method. By different pitching method, it is meant that the method of arranging the different pitch lengths of the tread elements in the central region is completely different than the method employed in the shoulder regions 14. This is distinct from simply using a different random sequence in the central tread region than is present in the shoulder regions 14. The preferred different pitching method in the central tread region 16 of the tire 10 is harmonic pitching. In harmonic pitching, an identical harmonic segment is repeated along the circumferential length of the tire tread. Each harmonic segment is made up of a group of different length pitches, using three to eight different pitch lengths and preferably three to five different pitch lengths, arranged in order from small to long and long to small in order to create a repeating harmonic pattern. In harmonic pitching, the pitch sequence is devoid of any frequency content lower than that corresponding to the modulating frequency of the harmonic segments, thus eliminating low frequency contributions to the 1^{st} and 2^{nd} harmonics. One exemplary harmonic pattern is illustrated in FIG. 2. For this noise distribution, there are five harmonic segments, with each segment having five different pitch lengths A, B, C, D, E of increasing length arranged in a segment pattern of ABCDEEDCBA.

By phase shifting the harmonic pitching pattern and the random pitching pattern such that the maximum amplitude MH of the harmonic pitching pattern modulation frequency is 180° out of phase with the corresponding component MR of the modulation frequencies of the random pitching pattern, disturbances resulting from the modulation frequency may be minimized. See FIG. 3, wherein the modulation frequencies of the two different pitching patterns are superimposed.

The harmonic pitching method is accomplished through the arrangement of any repeating tread feature in the desired tread region with the repeating tread feature being any known type of tread feature. In the tread of FIG. 1, the harmonic pitching method and the pitch lengths thereof are achieved by the use of the lateral grooves 28. The exact grooving and tread element configuration illustrated in FIG. 1 is only a single representation of a tire using harmonic pitching in a single region of the tire.

Also located in the tread central region 16 is the circumferential groove 24 that creates a visual representation of the repeating harmonic pattern. The circumferential groove 24 is the tread central region 16 has a low amplitude, low frequency meandering configuration. The groove 24 has a configuration formed by three to eight, most preferably five, repeating sinusoidal curves about the circumference of the tire. The full curve, having a length, L_{c}, is formed from a pair of groove segments, each segment have a length Lₛ. The segment length Lₛ of each groove segment is at least 1/16, or 6.25%, of the circumferential length of the tire tread 12. The preferred maximum segment length Lₛ is 1/6, or about 16% of the circumferential length of the tire tread 12. Ideally, the curvature of the groove is synchronized with the harmonic pitching of the tread elements in the tread central region; that is, as the meandering pattern in the groove 24 is repeated along the tire length not more than eight times, a single harmonic segment of the noise pattern corresponds to each occurrence of the meandering pattern.

The groove 24 has a low amplitude, or lateral extent, having a width W_{A}, as measured from a reference line RL of the groove 24 to the center of the groove 24. The reference line RL is parallel to the center plane CP and connects beginning, mid, and end points of the repeating pattern in the groove 24. The lateral extent W_{A} is at least equal to 5% of the tread width TW. The lateral extent W_{A} of each groove segment is also in the range of 5 to 40 % of the circumferential segment length LS. Preferably, the lateral extent W_{A} is in the range of 5 to 25% of the circumferential segment length Lₛ. The low meandering configuration of the groove 24 also minimizes groove wander of the tire; thereby improving the tire performance.

While the groove 24 of FIG. 1 has a repeating sinusoidal pattern with each groove segment being curved, the circumferential groove may have zig-zag configuration. The groove pattern length L_{c} of a zig-zag groove is still measured between a beginning point and an end point of the groove pattern wherein the groove is coincident with the pattern reference line RL at the beginning point, a mid-point, and the end point.

While the tread of FIG. 1 and the other tread embodiments illustrate a non-straight circumferential groove in the tread region defined by the harmonic pitching, any circumferential grooves located in the tread region may be a straight groove, or have any other configuration thereto.

Because the pitch sequences in the tread shoulder regions and the center region are different, for ease of manufacturing and mold formation, the shoulder regions 14 and central region 16 are separated by the straight grooves 18. As mold manufacturing techniques advance and more complex patterns can be manufactured, it may be possible to form the separating groove with a non-straight configuration.

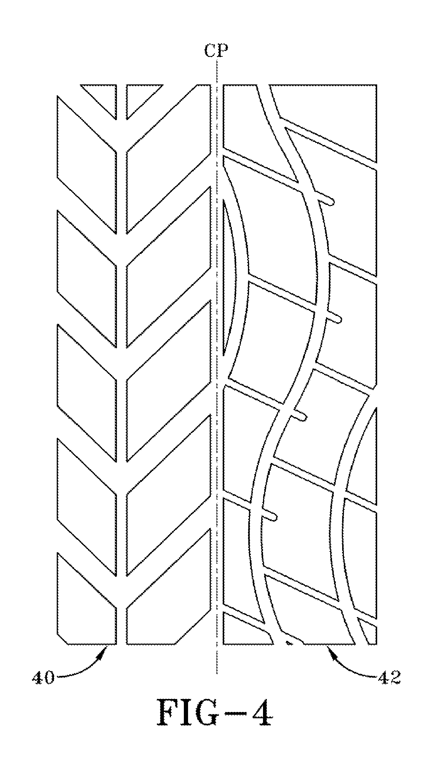

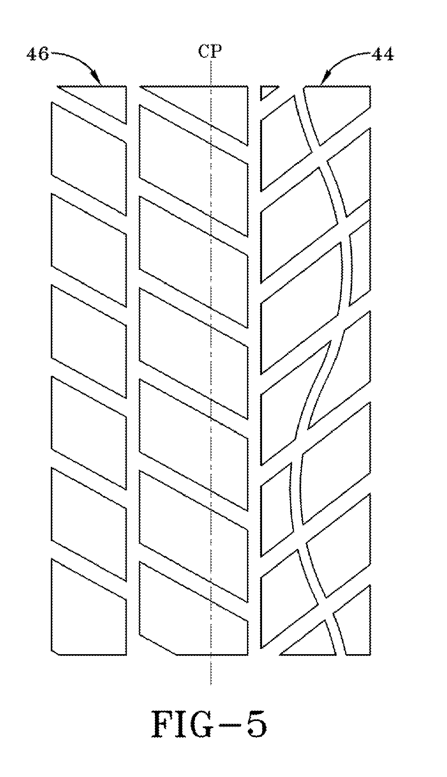

As the goal of the invention is the use of two different pitching techniques selected to offset or cancel each other out, the location of each of pitching technique in the tread pattern may be varied. In the tread of FIG. 4, one tread half 40, on one side of the center plane CP, is provided with randomized pitching of the tread elements, and the other tread half 40 is provided with harmonic pitching. In the tread of FIG. 5, harmonic pitching of the tread elements is limited to one shoulder region 44 of the tire, while the tread elements in the remaining tread area 46 are arranged in accordance with a random pitch method. Alternatively, harmonic pitching of the tread elements may be provided in the tread shoulder regions and with the randomized pitching provided in the tread central region.

Within each pitching method selected for the different tread regions, the number of pitches and pitch ratios is selected to achieve the desired reduction in noise and frequency disturbances and is also dependent upon the tire size, tread design, and tire application.

Additionally, as the ability to manufacture more complex tire molds improves, while the illustrated tires employ only two different types of pitching methods, more than two pitching methods may be employed in a single tread configuration.

While particular lateral grooves are illustrated in the different embodiments, one skilled in the art will appreciate that the exact block configuration created by the lateral grooves in the tread may be varied and the present invention is not limited to the exact tread block configurations illustrated.

## Claims

1. A pneumatic tire, the tire (10) comprising a tread (12), the tread (12) extending along the circumferential length of the tire, the tread having a plurality of tread elements (20), wherein each tread element (20) has a pitch length (P), and wherein the tread (12) is divided into at least two different regions (14, 16) across the width of the tread (12), **characterized by** the use of different pitching methods of the tread elements (30) in the different tread regions (14, 16).

2. The tire of claim 1 wherein the tread (12) has a tread central region (16) and two shoulder regions (14), the tread central region (16) employing a first pitching method and the two shoulder regions (14) employing a second pitching method.

3. The tire of claim 1 or 2 wherein one pitching method is a repeating harmonic sequence pitching.

4. The tire of claim 1, 2 or 3 wherein one pitching method is a random pitch sequence pitching.

5. The tire of claim 4 wherein the random pitch sequence has two random pitch sequences.

6. The tire of at least one of the previous claims wherein a combination of the two pitching methods cancels out, partially or substantially fully, the noise frequency contribution of each of the pitching methods.

7. The tire of at least one of the previous claims wherein the tread central region pitching method is a repeating harmonic sequence and the shoulder region pitching method is a random pitch sequence.

8. The tire of at least one of the previous claims wherein the tread (12) has two adjacent tread regions (14, 16), and each region has a width equal to one half of the tread width, and each tread region has a pitching method different from the pitching method of the other tread region.

9. The tire of at least one of the previous claims wherein the tread (12) is further **characterized by** a circumferentially extending groove (24) in one of the tread regions (14, 16), said groove having a configuration that is a visual representation of the type of pitching method employed in the respective tread region.

10. A method of arranging cyclic patterns in a tire tread, the tire tread (12) comprising a plurality of repeating tread elements (20), each tread element having (20) a pitch length (P), the method comprising:
a) diving the tread (12) into at least two axially adjacent tread zones (14, 16); and
b) arranging the tread elements (30) such that the cyclic pattern of the pitch lengths in each tread zone (14, 16) is accomplished by different pitching methods.
